# EUROPEAN PATENT SPECIFICATION

(11) **EP 1 516 898 B1**
(45) Date of publication and mention of the grant of the patent: **11.11.2009**
(21) Application number: 03021395.3
(22) Date of filing: 22.09.2003
(51) Int. Cl.: C09J 7/00, C09J 7/02

(54) **Pressure-sensitive adhesive tape**
Druckempfindliches Klebeband
Bande adhesif autocollant

(43) Date of publication of application: 23.03.2005
(73) Proprietor: NITTO DENKO CORPORATION, Osaka (JP)
(72) Inventor: Ukei, Hiroichi, Ibaraki-shi Osaka (JP); Yatagai, Takahiro, Ibaraki-shi Osaka (JP); Nagatsu, Hideki, Ibaraki-shi Osaka (JP); Natsume, Masayoshi, Ibaraki-shi Osaka (JP); Nakagawa, Yoshio, Ibaraki-shi Osaka (JP)
(74) Representative: Grünecker, Kinkeldey, Stockmair & Schwanhäusser Anwaltssozietät

(56) References cited:
- EP-A- 0 519 086
- EP-A- 1 184 437
- US-A- 4 391 853
- US-A- 4 545 843
- US-A- 5 100 728
- US-A- 5 599 602
- US-A- 5 660 922

## Description

### FIELD OF THE INVENTION

The present invention relates to a pressure-sensitive adhesive tape. More specifically, the invention relates a pressure-sensitive adhesive tape having excellent hand cutting properties and excellent strength in the longitudinal direction.

### BACKGROUND OF THE INVENTION

Hitherto, repeatedly releasable pressure-sensitive adhesive tapes or sheets ("pressure-sensitive adhesive tape or sheet" being hereinafter generically named as "pressure-sensitive adhesive tape") have been used in surface protection tapes or sheets for sticking utility for surface protection, etc. during transportation, processing, and curing of metal plates, coated metal plates, so-called "aluminum sashes", resin plates, decorative steel sheets, vinyl chloride based resin-laminated steel sheets, glass plates, etc. During sticking works of the pressure-sensitive adhesive tape, a cutting method using a cutting tool such as scissors and knives is frequently employed. Also, repeatedly releasable pressure-sensitive adhesive tapes are used in curing of building, curing of coating, etc., and as the pressure-sensitive adhesive tapes are used pressure-sensitive adhesive tapes in which a supporting substrate is subjected to uneven processing such that they can be easily cut by fingers during sticking works. Specifically, pressure-sensitive adhesive tapes described in, for example, Japanese Patent No. 2,694,854 can be enumerated as such pressure-sensitive adhesive tapes.

In such pressure-sensitive adhesive tapes, in the case where they are cut by a cutting method using a cutting tool such as scissors and knives, there is some possibility that the cutting tool injures an adherend. For this reason, it is demanded to realize pressure-sensitive adhesive tapes capable of being easily and safely cut with excellent workability.

Also, in curing of building or curing of coating, when a pressure-sensitive adhesive tape is released after curing, in the case where it is released at a high speed, or in the case where it is released in the low-temperature environment in winter, there is caused a problem such that a pressure-sensitive adhesive tape is liable to break. This is considered to be a problem of longitudinal peel strength (peel strength in the longitudinal direction of pressure-sensitive adhesive tape).

EP118443782 discloses the use of a pressure sensitive adhesive tape for providing a skid resistant surface.

### SUMMARY OF THE INVENTION

Accordingly, an object of the invention is to provide a pressure-sensitive adhesive tape having excellent hand cutting properties and capable of enhancing workability during cutting.

Another object of the invention is to provide a pressure-sensitive adhesive tape that can be cut with excellent hand cutting properties without causing breakage on the way even in the case where it is released at a high speed or in the case where it is released in the low-temperature environment.

In order to attain the foregoing objects, the present inventors made extensive and intensive investigations. As a result, it has been found that by defining physical properties on the relationship between a stress and a strain of a pressure-sensitive adhesive tape having an uneven shape on the surface of a supporting substrate, not only the pressure-sensitive adhesive tape can be cut with excellent hand cutting properties and exhibits good workability during cutting, but also it can be cut without causing breakage on the way even in the case where it is released at a high speed or in the case where it is released in the low-temperature environment, leading to accomplishment of the invention.

Specifically, the invention is concerned with a pressure-sensitive adhesive tape according to claim 1. Preferred embodiments are disclosed in the dependent claims.

The foregoing pressure-sensitive adhesive tape preferably has a maximum stress at an elongation of not more than 50 % of 11 N/10 mm or more. Also, the plastic film may be a film made of an olefin based resin. Moreover, the supporting substrate may have transparency.

### BRIEF DESCRIPTION OF THE DRAWINGS

Fig. 1 is a graph to show a stress-strain curve with respect to the pressure-sensitive adhesive tape of Example 1.
Fig. 2 is a graph to show a stress-strain curve with respect to the pressure-sensitive adhesive tape of Example 2.
Figs. 3A and 3B each is a schematic view to partially show one example of the structure of the plastic film constituting the pressure-sensitive adhesive tape of the invention, in which Fig. 3A is a plan view seen from the upper side, and Fig. 3B is a sectional view.
Fig. 4 is a graph to show a stress-strain curve with respect to the pressure-sensitive adhesive tape of Example 3.
Fig. 5 is a graph to show a stress-strain curve with respect to the pressure-sensitive adhesive tape of Example 4.
Fig. 6 is a graph to show a stress-strain curve with respect to the pressure-sensitive adhesive tape of Comparative Example 1.
Fig. 7 is a graph to show a stress-strain curve with respect to the pressure-sensitive adhesive tape of Comparative Example 2.
Fig. 8 is a graph to show a stress-strain curve with respect to the pressure-sensitive adhesive tape of Comparative Example 3.
Fig. 9 is a graph to show a stress-strain curve with respect to the pressure-sensitive adhesive tape of Comparative Example 4.
Fig. 10 is a graph to show a stress-strain curve with respect to the pressure-sensitive adhesive tape of Comparative Example 5.
Fig. 11 is a graph to show a stress-strain curve with respect to the pressure-sensitive adhesive tape of Comparative Example 6.

### Description of Reference Numerals and Signs

- 1:: Plastic film
- 2:: Concave portion
- d:: Width of the concave portion 2
- L:: Pitch interval of the concave portion 2
- H:: Depth of the concave portion 2
- X:: Longitudinal direction of the plastic film 1
- Y:: Width direction of the plastic film 1

### DETAILED DESCRIPTION OF THE INVENTION

The pressure-sensitive adhesive tape of the invention is characterized in that a maximum stress at an elongation of not more than 50 % is larger than a stress at break and that an elongation at break is from 100 to 300 %. Also, it is important that the pressure-sensitive adhesive tape of the invention has a supporting substrate made of a plastic film and a pressure-sensitive adhesive layer formed on at least one side of the supporting substrate, an uneven portion having a shape extending in the vertical direction against the longitudinal direction being disposed on one side of the supporting substrate. Since the pressure-sensitive adhesive tape of the invention has the foregoing construction, it has excellent hand cutting properties. For this reason, the pressure-sensitive adhesive tape of the invention can be easily and safely cut by fingers without need of cutting using a cutting tool such as scissors and knives. Accordingly, it is possible to prevent an adherend from injury by the cutting tool and to greatly enhance the workability during cutting. Also, in curing of building or. curing of coating, during releasing the pressure-sensitive adhesive tape after curing, it is possible to prevent the pressure-sensitive adhesive tape from breakage on the way and to cut it with excellent hand cutting properties even in the case where it is released at a high speed, or in the case where it is released in the low-temperature environment.

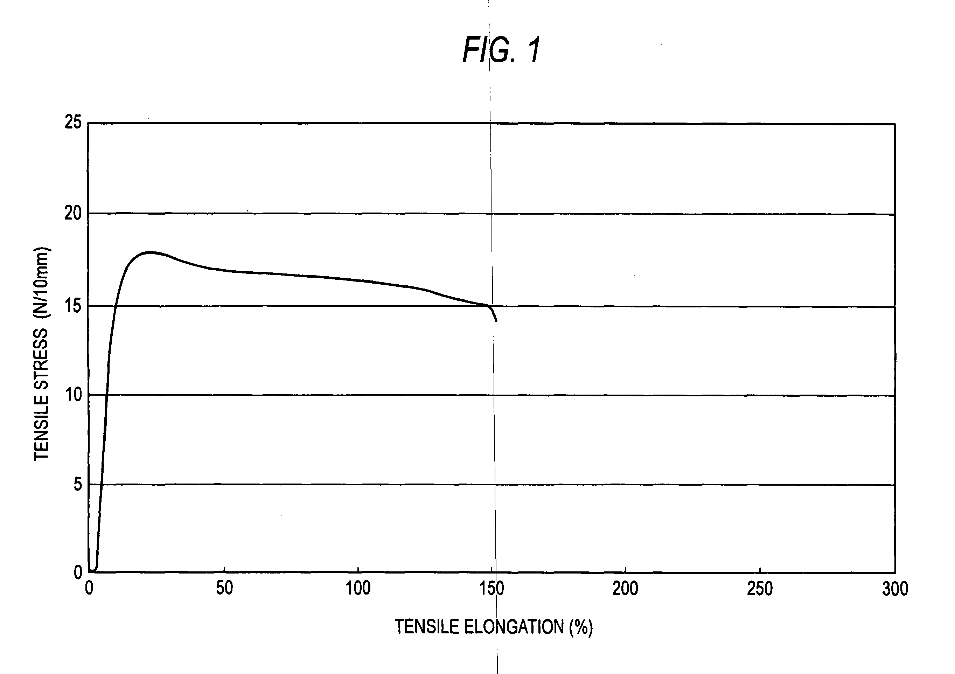

The pressure-sensitive adhesive tape of the invention will be specifically described using a stress-strain curve, as the need arises. Fig. 1 is a graph to show one example of a stress-strain curve with respect to the pressure-sensitive adhesive tape of the invention. In this stress-strain curve, the ordinate stands for a stress (N/10 mm), and the abscissa stands for a tensile elongation (%). In the stress-strain curve according to Fig. 1, when the tensile elongation increases in the region of from 0 to about 50 %, the stress rapidly rises; thereafter, the stress gradually decreases with an increase of the tensile elongation; and the pressure-sensitive adhesive tape causes breakage at a tensile elongation of about 150 %. Thus, in the invention, it is important that (1) a maximum stress at an elongation of not more than 50 % is larger than a stress at break and that (2) an elongation at break is from 100 to 300 %.

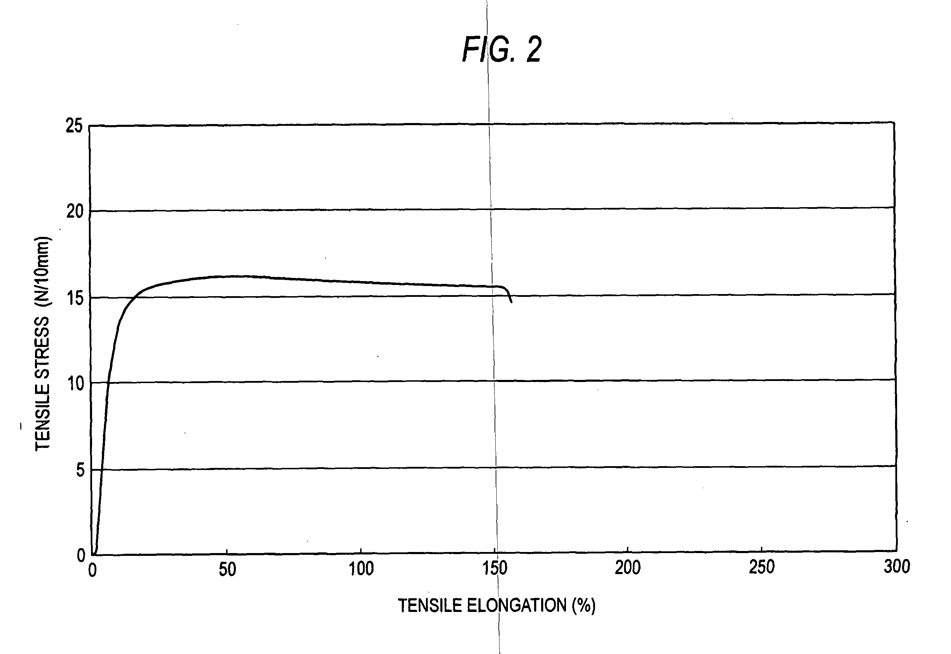

Incidentally, in the stress-strain curve according to Fig. 1, the stress has a remarkable peak within the range of an elongation of not more than 50 %, but as shown in a stress-strain curve according to Fig. 2, the stress may not have a remarkable peak. Fig. 2 is a graph to show other example of the stress-strain curve with respect to the pressure-sensitive adhesive tape of the invention.

Also, in the stress-strain curve according to Fig. 1, after reaching the peak (or the maximum value), the stress gradually decreases with an increase of the elongation, but as shown in the stress-strain curve according to Fig. 2, the stress may keep a substantially constant value.

In the invention, so far as the maximum stress at an elongation of not more than 50 % is larger than the stress at break, a difference or ratio between the maximum stress at an elongation of not more than 50 % and the stress at break is not particularly limited. As the difference between the maximum stress at an elongation of not more than 50 % and the stress at break, for example, it is desired that a value of [(maximum stress at an elongation of not more than 50 %) - (stress at break)] is 0.1 N/10 mm or more (for example, from 0.1 to 7 N/10 mm, preferably from 0.5 to 5 N/10 mm, and more preferably from 1 to 3 N/10 mm). Incidentally, when the maximum stress at an elongation of not more than 50 % is smaller than the stress at break, the hand cutting properties are lowered.

Also, the value (absolute value) of the maximum stress at an elongation of not more than 50 % is not particularly limited, but for example, is desirably 11 N/10 mm or more (for example, from 11 to 25 N/10 mm, preferably from 12 to 25 N/10 mm, and more preferably from 13 to 25 N/10 mm). When the value of the maximum stress at an elongation of not more than 50 % is less than 11 N/10 mm, the pressure-sensitive adhesive tape is liable to break during releasing the pressure-sensitive adhesive tape after curing.

Moreover, the elongation at break is from 100 to 300 % (preferably from 100 to 250 %, more preferably from 120 to 250 %, and especially from 150 to 200 %). When the elongation at break exceeds 300 %, the hand cutting properties are lowered, whereas when it is less than 100 %, the pressure-sensitive adhesive tape is liable to break during releasing.

In the invention, the stress-strain curve of a pressure-sensitive adhesive tape is obtained by measuring a stress of a pressure-sensitive adhesive tape having a width of 10 mm by stretching the pressure-sensitive adhesive tape under a condition of a distance between chucks of 50 mm and a stress rate of 1,000 mm/min at room temperature (23 °C) and at 65 % RH using a tensile tester (name of tester: Shimadzu Autograph, manufactured by Shimadzu Corporation). Incidentally, a stress at the time when a part of the pressure-sensitive adhesive tape cracks during stretching is defined as the stress at break, and an elongation at the time when a part of the pressure-sensitive adhesive tape cracks similarly is defined as the elongation at break.

As described previously, the pressure-sensitive adhesive tape of the invention has a supporting substrate made of a plastic film and a pressure-sensitive adhesive layer formed on at least one side of the supporting substrate. Also, the pressure-sensitive adhesive tape of the invention has an uneven portion having a shape extending in the vertical direction against the longitudinal direction on one side of the supporting substrate. So far as the pressure-sensitive adhesive tape has the foregoing construction and meets the foregoing physical properties, the formulation of the plastic film as the supporting substrate and the formulation of a pressure-sensitive adhesive of the pressure-sensitive adhesive layer are not particularly limited.

Examples of materials of the plastic film as the supporting substrate include olefin based resins such as polypropylene based resins (such as polypropylene) and polyethylene based resins (such as high-density polyethylene, medium-density polyethylene, low-density polyethylene, linear low-density polyethylene, ultra-low-density polyethylene, ethylene-vinyl acetate copolymer, ethylene-ethyl acrylate copolymer, and ethylene-propylene copolymer); and thermoplastic elastomers. The material of the plastic film can be used singly or in admixture of two or more thereof.

As the material of the plastic film, olefin based resins are preferable, with polyethylene based resins being especially suitable. In the invention, of the polyethylene based resins are suitable mixed resins (mixtures) comprising a combination of high-density polyethylene and low-density polyethylene. That is, the resin contains high-density polyethylene and low-density polyethylene. In such a mixed resin, a ratio of the high-density polyethylene to the low-density polyethylene can be, for example, chosen within the range of from 10/90 to 90/10 (preferably from 20/80 to 50/50) in terms of a weight ratio of high-density polyethylene to low-density polyethylene. Incidentally, as the high-density polyethylene are preferable ones having a density of from 0.940 g/cm³ to 0.970 g/cm³ and are especially preferable ones having a density of from 0.950 g/cm³ to 0.965 g/cm³. On the other hand, as the low-density polyethylene are preferable ones having a density of from 0.880 g/cm³ to 0.930 g/cm³, and are especially preferable ones having a density of from 0.910 g/cm³ to 0.929 g/cm³. Incidentally, these densities are values measured according to JIS K7112.

The plastic film contains a filter and may contain additives (such as colorants (such as pigments and dyes), age resistors, and plasticizers). Incidentally, for the sake of enhancing the hand cutting properties of the pressure-sensitive adhesive tape, fillers such as calcium carbonate are possibly contained in the plastic film in a proportion of not more than 5 parts by weight based on 100 parts by weight of the resin constituting the plastic film. In the invention, it is not always necessary to add the filler made of such an inorganic compound.

However, in the case where various fillers are used for the purpose of imparting other effects than the hand cutting properties, the fillers may be compounded. Examples of other effects than the hand cutting properties include flame retardance, light resistance, heat resistance, heat deformation properties, and rigidity. In this case the amount of the filler to be used is not more than 5 parts by weight (preferably from 1 to 3 parts by weight) based on 100 parts by weight of the resin constituting the plastic film.

In the invention, an uneven portion having a shape extending in the width direction (vertical direction against the longitudinal direction) is formed on one side of the plastic film as the supporting substrate. The shape of this uneven portion is not particularly limited, but examples include a conical shape, a triangular pyramid shape, a quadrangular pyramid shape, a hemispherical shape, a columnar shape, a triangular prism shape, and a quadrangular prism shape.

The uneven portion may be in any state so far as it is formed such that it extends in the width direction (vertical direction against the longitudinal direction) of the plastic film. For example, in the case where the shape of a concave portion is a conical shape, a triangular pyramid shape, quadrangular pyramid shape, or a hemispherical shape, a plurality of concave portions having a conical shape, a triangular pyramid shape, quadrangular pyramid shape, or a hemispherical shape are formed in the width direction, thereby forming a concave portion having a shape extending in the width direction as a whole. Also, in the case where the shape of a concave portion is a columnar shape, a triangular prism shape, or a quadrangular prism shape, the columnar, triangular prismal or quadrangular prismal concave portion per se forms a shape such that it extends in the width direction. Thus, the uneven portion may have a shape such that only one concave portion extends in the width direction or a shape such that a combination of a plurality of concave portions extends to the width direction.

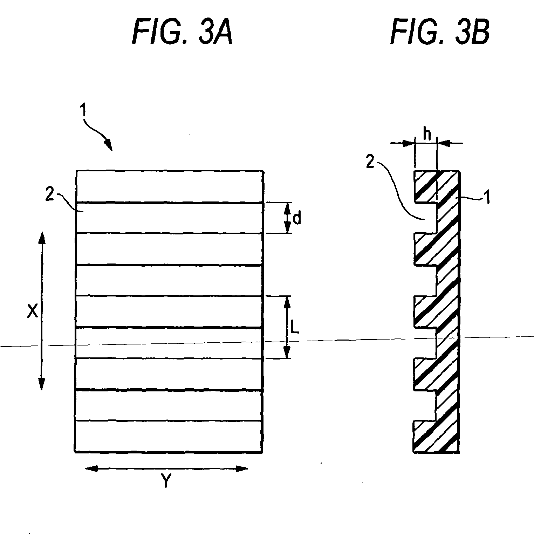

In the invention, it is preferable that the uneven portion is disposed in a linear or curved state (such as a zigzag state and a waveform state). For example, as shown in Figs. 3A and 3B, there is enumerated a shape in which linear concave portions are formed in the width direction. Figs. 3A and 3B each is a schematic view to partially show one example of the structure of the plastic film constituting the pressure-sensitive adhesive tape of the invention, in which Fig. 3A is a plan view seen from the upper side, and Fig. 3B is a sectional view. In Figs. 3A and 3B, linear concave portions having a section of a quadrangular prism shape are provided in the width direction of a longitudinal strip-like plastic sheet. Incidentally, in Figs. 3A and 3B, 1 denotes a plastic film; 2 denotes a concave portion; d denotes a width of the concave portion 2; L denotes a pitch interval of the concave portion 2; h denotes a depth of the concave portion 2; X denotes the longitudinal direction of the plastic film 1; and Y denotes the width direction of the plastic film 1, respectively.

The size (dimension) of the uneven portion is not particularly limited, but for example, the depth (h) of the concave portion is from about 0.02 to 0.15. mm (preferably from 0.04 to 0.12 mm). When the depth of the concave portion is less than 0.02 mm, though the longitudinal peel strength in the longitudinal direction of the pressure-sensitive adhesive tape is increased, the hand cutting properties in the width direction may possibly be lowered.

Also, the width (d) of the concave portion is not particularly limited but for example, can be chosen within the range of from about 0.01 to 0.5 mm (preferably from 0.01 to 0.2 mm) .

Moreover, the pitch interval (L) of the concave portion is not particularly limited but for example, can be chosen within the range of from about 0.5 to 5 mm (preferably from 0.6 to 1.4 mm) .

Examples of the method of forming the uneven portion include a method in which a resin in a molten state is pressed against a molding roller having unevennesses engraved thereon, thereby transferring the uneven shape onto the resin; and a method in which after forming a plastic film, the plastic film is pressed against a roller having an uneven shape, thereby forming unevennesses on the plastic film. The method of forming the uneven portion can properly be chosen from known or conventional methods according to a desired shape of the uneven portion.

The surface (one side or both sides) of the plastic film may be subjected to various known or conventional surface processings including corona discharge processing, undercoating processing, and back processing.

The thickness (total thickness) of the plastic film is not particularly limited but for example, can be chosen within the range of from about 20 to 300 µm (preferably from 50 to 200 µm, and more preferably from 70 to 150 µm). Incidentally, the supporting substrate may have any form of a single layer or multiple layers.

The supporting substrate or plastic film may have transparency or may be opaque, but it is preferable that the supporting substrate or plastic film has transparency.

A pressure-sensitive adhesive layer is formed on at least one side of the supporting substrate made of such a plastic film. The pressure-sensitive adhesive constituting the pressure-sensitive adhesive layer is not particularly limited, but various pressure-sensitive adhesives that are classified into, for example, rubber based pressure-sensitive adhesives, acrylic pressure-sensitive adhesives, silicone based pressure-sensitive adhesives, and urethane based pressure-sensitive adhesives can be used. The pressure-sensitive adhesive can properly be chosen with known or conventional pressure-sensitive adhesives according to the adherend, the purpose, etc. The pressure-sensitive adhesive can be used singly or in admixture of two or more thereof.

The pressure-sensitive adhesive layer can be formed on at least one side of a supporting substrate having an uneven portion on one side thereof by a method in which the pressure-sensitive adhesive is directly coated on at least one side (one side or both sides) of the supporting substrate; or a method in which a pressure-sensitive adhesive is coated on a separator, and the pressure-sensitive adhesive on the separator is transferred onto the supporting substrate. Incidentally, in the case where the pressure-sensitive adhesive layer is formed on one side of the supporting substrate, the pressure-sensitive adhesive layer is formed on the side of the supporting substrate on which the uneven portion is not formed. . In the invention, the pressure-sensitive adhesive layer is formed on the side of the supporting substrate on which the uneven portion is not formed. In this case, the side of the supporting substrate on which the uneven portion is formed can be made a release side of the pressure-sensitive adhesive tape wound in a roll shape.

Incidentally, during coating the pressure-sensitive adhesive, conventional coaters such as a gravure coater, a reverse roll coater, a kiss roll coater, a dip roll coater, a bar coater, a knife coater, and a spray coater can be used.

The thickness (total thickness) of the pressure-sensitive adhesive layer is not particularly limited but for example, can be chosen within the range of from about 1 to 100 µm (preferably from 5 to 50 µm, and more preferably from 15 to 40 µm).

The pressure-sensitive adhesive tape of the invention can be utilized as a pressure-sensitive adhesive tape wound in a roll shape. Incidentally, the surface of the pressure-sensitive adhesive layer may be protected by a separator.

According to the pressure-sensitive adhesive tape of the invention, it is possible to impart excellent hand cutting properties and to enhance workability during cutting. Also, the pressure-sensitive adhesive tape of the invention can be cut with excellent hand cutting properties without causing breakage on the way even in the case where it is released at a high speed or in the case where it is released in the low-temperature environment.

The invention will be described below in detail with reference to the following Examples, but it should not be construed that the invention is limited thereto. Incidentally, all parts are a part by weight.

### (Materials to be used)

· Low-density polyethylene (hereafter sometimes referred to as "LDPE"):
   (1) Trade name: "Sumikathene G201" (manufactured by Sumitomo Chemical Co., Ltd., density: 0.919 g/cm³ (hereinafter sometimes referred to as "LDPE-1"))
   (2) Trade name: "Sumikathene F218-0" (manufactured by Sumitomo Chemical Co., Ltd., density: 0.919 g/cm³ (hereinafter sometimes referred to as "LDPE-2"))
   (3) Trade name: "Sumikathene G401" (manufactured by Sumitomo Chemical Co., Ltd., density: 0.926 g/cm³ (hereinafter sometimes referred to as "LDPE-3"))
   (4) Trade name: "Sumikathene F102-0" (manufactured by Sumitomo Chemical Co., Ltd., density: 0.922 g/cm³ (hereinafter sometimes referred to as "LDPE-4"))
· High-density polyethylene (hereafter sometimes referred to as "HDPE"):
   (1) Trade name: "Hizex 2200J (manufactured by Mitsui Chemicals, Inc., density: 0.964 g/cm³ (hereinafter sometimes referred to as "HDPE-1"))
   (2) Trade name: "Hizex 5000SF (manufactured by Mitsui Chemicals, Inc., density: 0.956 g/cm³ (hereinafter sometimes referred to as "HDPE-2"))
· Filler:
   (1) Inorganic filler (precipitated calcium carbonate light, manufactured by Tsuchiya Calcium Co., Ltd.)

In the following some examples provided for a better understanding of the invention are provided.

### EXAMPLE 1

LDPE and HDPE were dry blended in a proportion as shown in Table 1 to prepare a mixed resin composition, which was then extruded at a die temperature of 260 °C using an extrusion molding machine to prepare a plastic film. The plastic film was pressed against a roller having unevennesses engraved thereon, to prepare a plastic film (tape substrate) having a total thickness of 0.100 mm, a depth of the concave portion (groove) of 0.040 mm, a width of the concave portion of 0.200 mm, and a pitch interval of the uneven portion (pitch interval of the concave portion) of 1.000 mm, as shown in Figs. 3A and 3B. One side (side on which no concave portion was formed) of this tape substrate (supporting substrate) was subjected to corona discharge processing, and an acrylic pressure-sensitive adhesive was coated on the corona discharge-processed side (thickness after drying: 30 µm), followed by winding in a roll form to prepare a pressure-sensitive adhesive tape wound in a roll shape.

### EXAMPLES 2 TO 4

Tape substrates were prepared in the same manner as in Example 1, except for employing the proportion of LDPE and HDPE as shown in Table 1. Further, the same procedures as in Example 1 were followed to prepare pressure-sensitive adhesive tapes wound in a roll shape.

### COMPARATIVE EXAMPLES 1 TO 6

Tape substrates were prepared in the same manner as in Example 1, except for employing the proportion of LDPE and HDPE as shown in Table 2. Incidentally, in Comparative Example 6 (in the case of compounding a filler), the filler is previously mixed with HDPE or LDPE to prepare a masterbatch.

Thereafter, the same procedures as in Example 1 were further followed to prepare pressure-sensitive adhesive tapes wound in a roll shape. Incidentally, only in Comparative Example 6, the die temperature was 190 °C.

**Table 1**

| | **Example** | | | |
|---|---|---|---|---|
| | **1** | **2** | **3** | **4** |
| **LPDE:** | | | | |
| **LDPE-1** | 50 | 70 | 80 | |
| **LDPE-2** | | | | 50 |
| **LPDE-3** | | | | |
| **LPDE-4** | | | | |

| **HDPE:** | | | | |
|---|---|---|---|---|
| **HDPE-1** | 50 | 30 | 20 | 50 |
| **HDPE-2** | | | | |
| **Inorganic filler** | | | | |

**Table 2**

| | **Comparative Example** | | | | | |
|---|---|---|---|---|---|---|
| | **1** | **2** | **3** | **4** | **5** | **6** |
| **LPDE:** | | | | | | |
| **LDPE-1** | | | | | | 50 |
| **LDPE-2** | | | | | | |
| **LPDE-3** | | | | | 70 | |
| **LPDE-4** | 70 | | 70 | 100 | | |

| **HDPE:** | | | | | | |
|---|---|---|---|---|---|---|
| **HDPE-1** | 30 | 100 | | | 30 | 50 |
| **HDPE-2** | | | 30 | | | |
| **Inorganic filler** | | | | | | 10 |

### (Evaluation method)

Each of the pressure-sensitive adhesive tapes obtained in Examples 1 to 4 and Comparative Examples 1 to 6 was cut in a prescribed width (100 mm-wide, 25 mm-wide, 63 mm-wide, etc.) using a commercially available cutter knife, to prepare specimens. The specimens were subjected to the following tensile test and tear test and evaluated for tensile characteristics and tear characteristics. The evaluation results are shown in Table 3 or 4.

### (Tensile test)

A stress of the pressure-sensitive adhesive tape having a width of 10 mm is measured by stretching it under a condition of a distance between chucks of 50 mm and a stress rate of 1,000 mm/min at room temperature (23 °C) and at 65 % RH using a tensile tester (name of tester: Shimadzu Autograph, manufactured by Shimadzu Corporation). Incidentally, a stress at the time when a part of the pressure-sensitive adhesive tape cracks during stretching is defined as the stress at break, and an elongation at the time when a part of the pressure-sensitive adhesive tape cracks similarly is defined as the elongation at break.

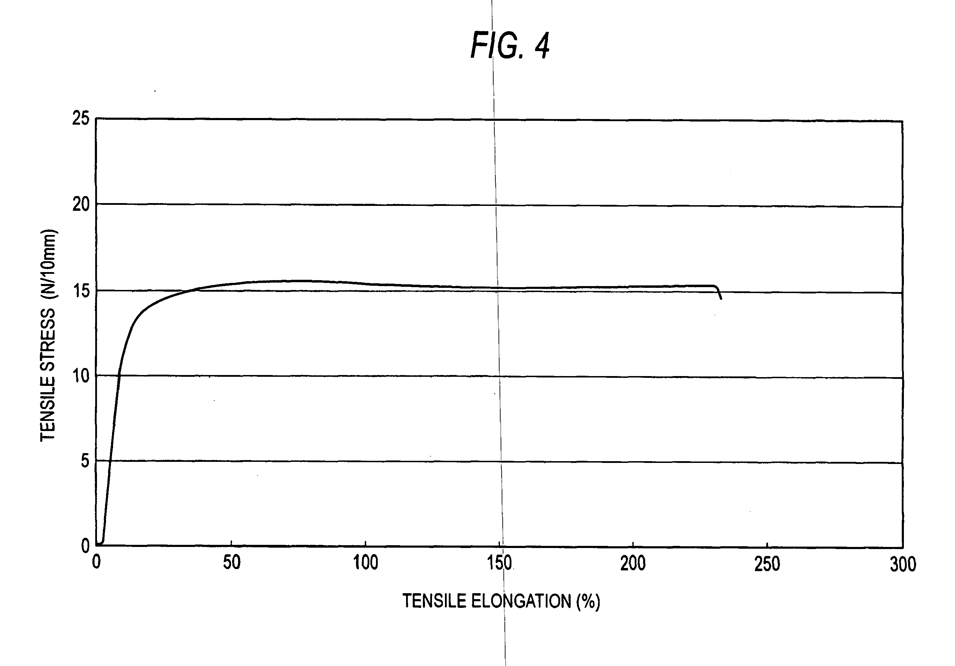

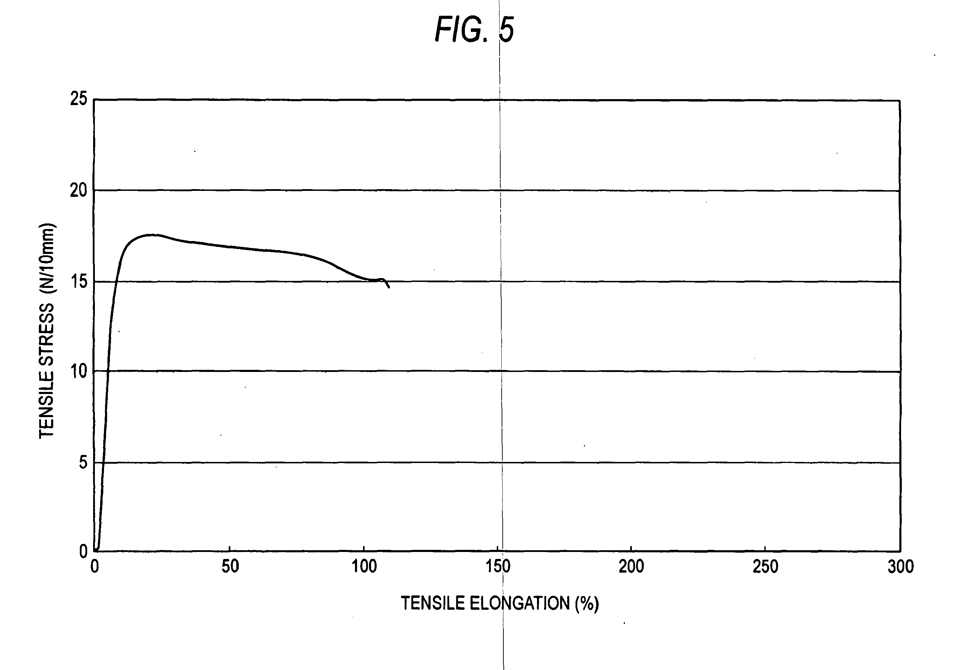

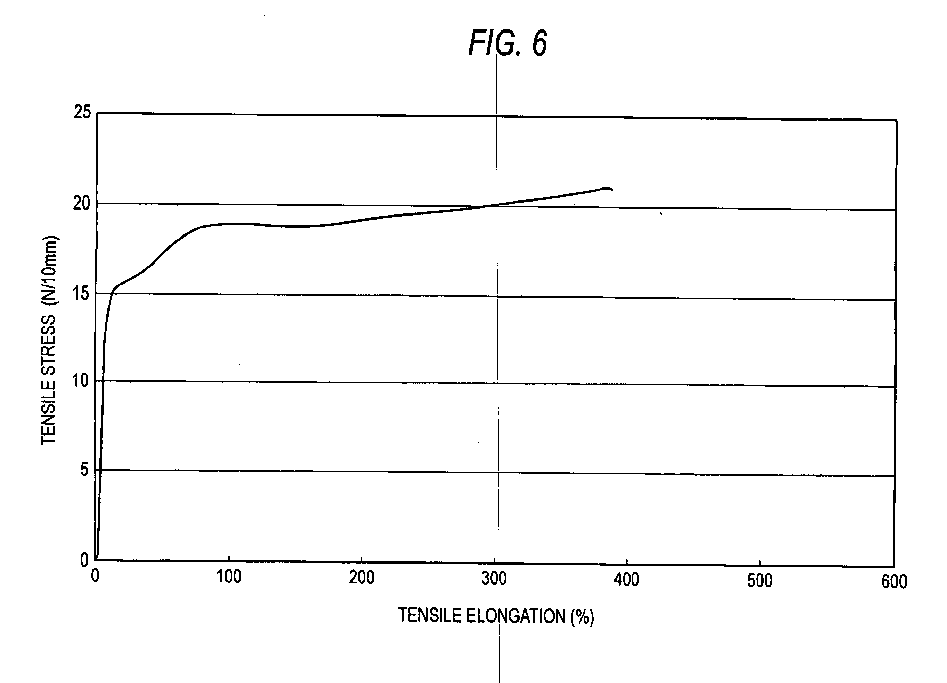

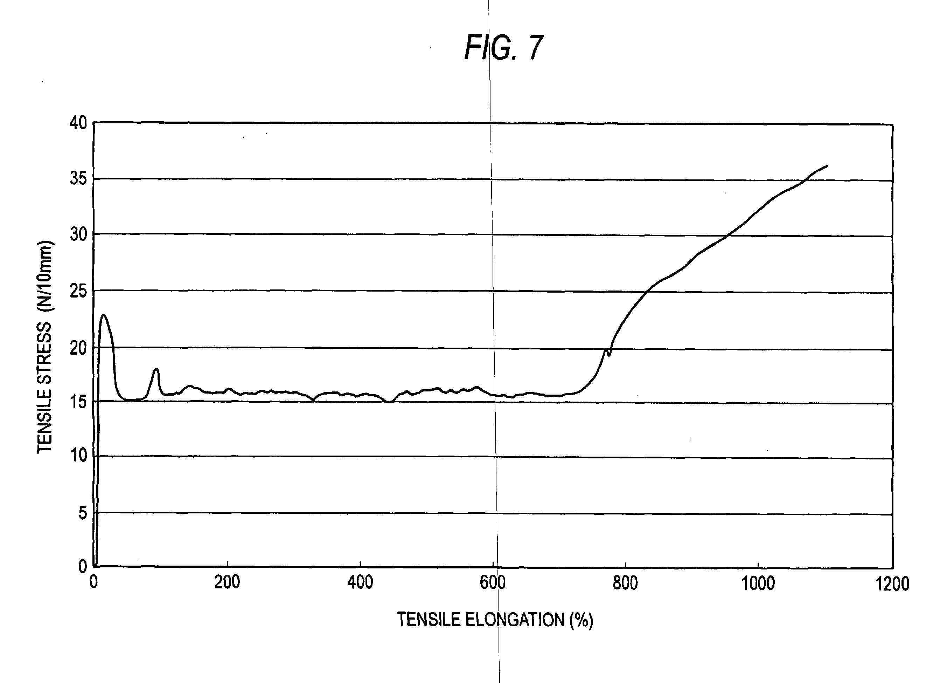

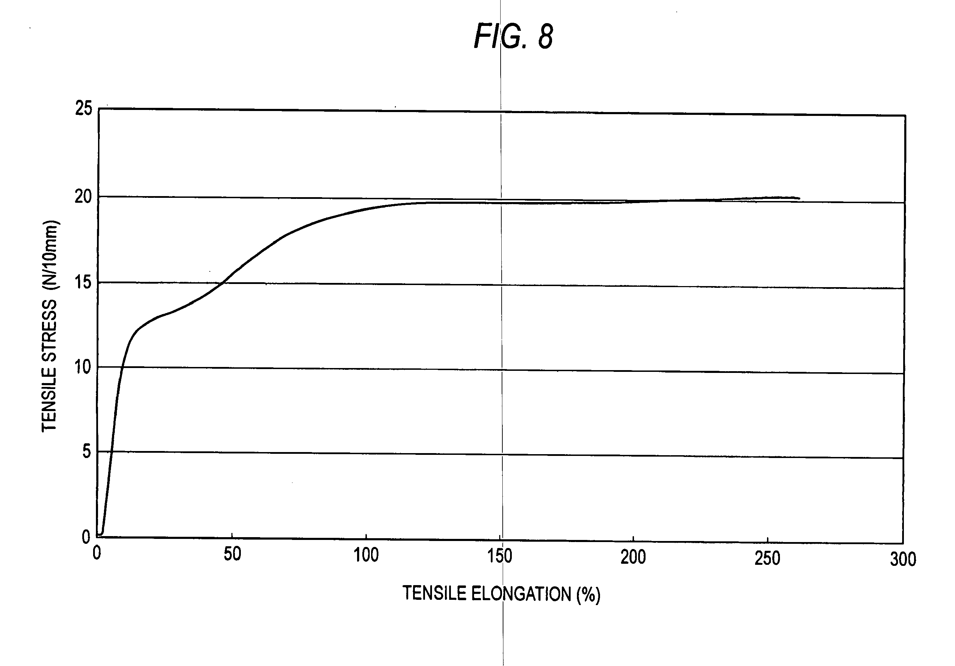

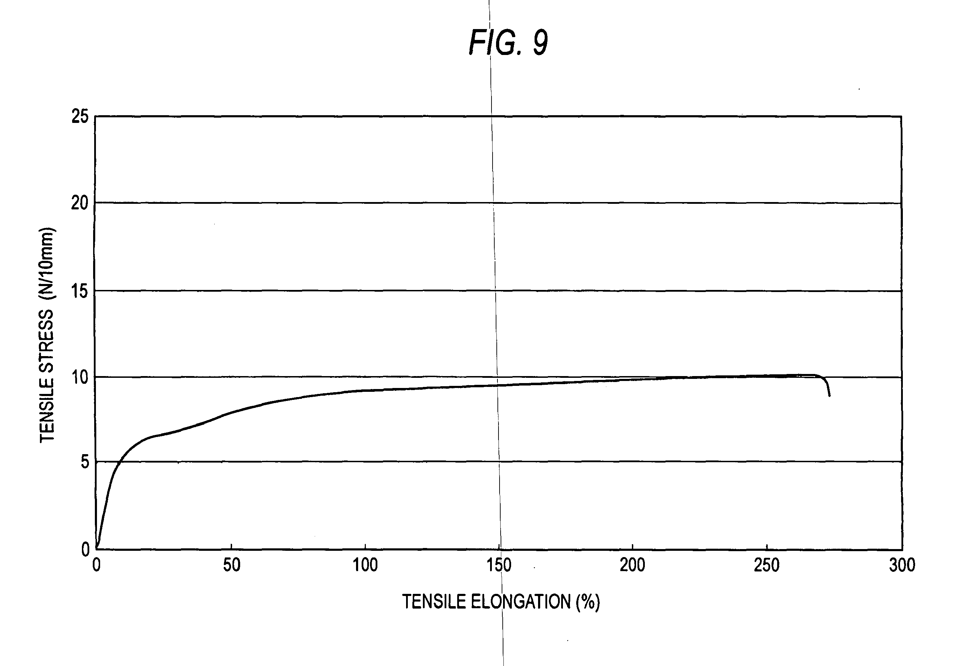

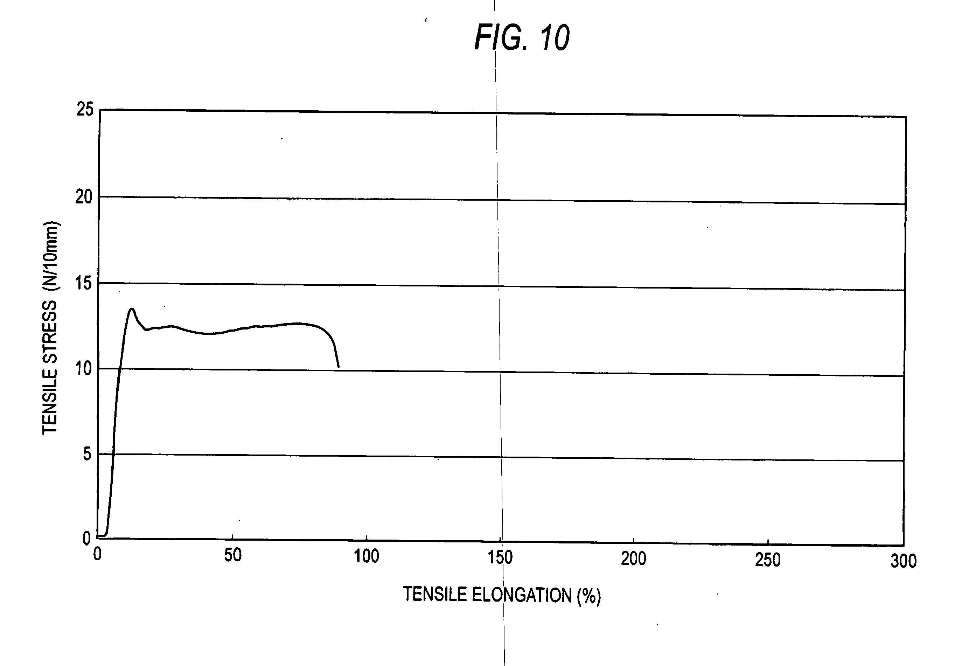

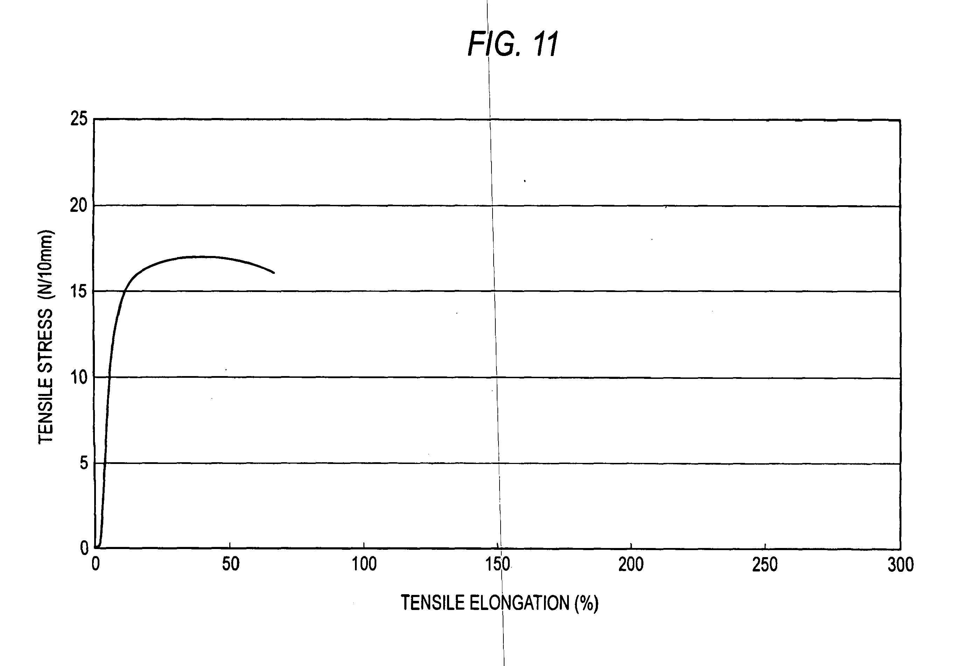

Incidentally, the stress-strain curve with respect to the pressure-sensitive adhesive tape of Example 1 is shown in Fig. 1; the stress-strain curve with respect to the pressure-sensitive adhesive tape of Example 2 is shown in Fig. 2; the stress-strain curve with respect to the pressure-sensitive adhesive tape of Example 3 is shown in Fig. 4; and the stress-strain curve with respect to the pressure-sensitive adhesive tape of Example 4 is shown in Fig. 5, respectively. Also, the stress-strain curves with respect to the pressure-sensitive adhesive tapes of Comparative Examples 1 to 6 are shown in Figs. 6 to 11, respectively.

Also, the pressure-sensitive adhesive tape having a width of 25 mm was stuck in a length of 300 mm on a commercially available flooring plate under a condition of room temperature (23 °C) and 65 % RH and after further providing a leading length of 100 mm, was peeled apart under a condition of a peel angle of about 30° and a peel speed of about 1,000 mm/min (three times in total). Thus, the pressure-sensitive adhesive tape was evaluated for longitudinal peel strength according to the following evaluation criteria.

### (Evaluation criteria of longitudinal peel strength)

○: Peeling could be performed without causing breakage on the way in all occurrences of three times.
Δ: Peeling could be performed without causing breakage two times.
×: Peeling could be performed only one time, or breakage occurred in all occurrences of three times.

### (Tear test)

One pressure-sensitive adhesive tape having a width of 63 mm was measured for tear resistance and evaluated for tear properties under a condition of room temperature (23 °C) and 65 % RH without providing a notch using an Elmendorf tear resistance tester (manufactured by Tester Sangyo Co., Ltd.).

Additionally, a hand cutting test (test of cutting the pressure-sensitive adhesive tape by fingers) was carried out five times as the organoleptic examination, and the tear properties (organoleptic examination) were evaluated according to the following evaluation criteria.

### (Evaluation criteria of tear properties by organoleptic examination)

○: The pressure-sensitive adhesive tape can be easily cut by fingers in all occurrences of five times.
Δ: The pressure-sensitive adhesive tape can be easily cut by fingers four times.
×: The pressure-sensitive adhesive tape cannot be easily cut by fingers more than three times.

**Table 3**

| | **Example** | | | |
|---|---|---|---|---|
| | **1** | **2** | **3** | **4** |
| **Tensile characteristics:** | | | | |
| **Maximum stress within the range of an elongation of not more than 50 % (N/10 mm)** | 18 | 16.1 | 15.6 | 17.6 |
| **Stress at break (N/10 mm)** | 14.9 | 15.3 | 15.4 | 14.7 |
| **Elongation at break (%)** | 151 | 154 | 231 | 109 |
| **Evaluation of longitudinal peel strength (organoleptic examination)** | ○ | ○ | ○ | ○ |

| **Tear characteristics:** | | | | |
|---|---|---|---|---|
| **Elmendorf tear test (N)** | 0.96 | 1.12 | 1.60 | 1.12 |
| **Evaluation of tear properties by organoleptic examination** | ○ | ○ | ○ | ○ |

**Table 4**

| | **Comparative Example** | | | | | |
|---|---|---|---|---|---|---|
| **Tensile characteristics:** | **1** | **2** | **3** | **4** | **5** | **6** |
| **Maximum stress within the range of an elongation of not more than 50 % (N/10 mm)** | 17.3 | 23 | 15.4 | 7.9 | 13.5 | 17.1 |
| **Stress at break (N/10 mm)** | 21.1 | 36.4 | 20.3 | 10 | 12 | 16.1 |
| **Elongation at break (%) break (%)** | 387 | 1,096 | 261 | 269 | 86 | 66 |
| **Evaluation of longitudinal peel strength (organoleptic examination)** | **○** | ○ | ○ | × | **Δ** | Δ |

| **Tear characteristics:** | | | | | | |
|---|---|---|---|---|---|---|
| **Elmendorf tear test (N)** | Not cut | Not cut | Not cut | Not cut | 0.64 | 5.12 |
| **Evaluation of tear properties by organoleptic examination** | × | × | × | × | ○ | Δ |

As is clear from Table 3 and Figs. 1, 2, 4 and 5, in any of the pressure-sensitive adhesive tapes of Examples 1 to 4, the maximum stress within the range of an elongation of not more than 50 % is larger than the stress at break, the maximum stress within the range of an elongation of not more than 50 % is 11 N/10 mm or more, and the elongation at break is from 100 to 300 %. Further, any of the pressure-sensitive adhesive tapes according to Examples 1 to 4 had good hand cutting properties and could be easily and stably peeled apart without causing breakage on the way.

On the other hand, in the pressure-sensitive adhesive tapes according to Comparative Examples 1 and 2, the maximum stress within the range of an elongation of not more than 50 % is smaller than the stress at break, and the elongation at break exceeds 300 %. These pressure-sensitive adhesive tapes cannot be cut by fingers.

In the pressure-sensitive adhesive tapes according to Comparative Examples 3 and 4, though the elongation at break is smaller than 300 %, and the maximum stress within the range of an elongation of not more than 50 % is smaller than the stress at break. These pressure-sensitive adhesive tapes cannot be cut by fingers.

In the pressure-sensitive adhesive tapes according to Comparative Examples 5 and 6, though the maximum stress within the range of an elongation of not more than 50 % is larger than the stress at break, the elongation at break is smaller than 100 %. These pressure-sensitive adhesive tapes are liable to break in the longitudinal direction.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive tape comprising a supporting substrate made of a plastic film and a pressure-sensitive adhesive layer, an uneven portion having a shape extending in the vertical direction against the longitudinal direction being disposed on one side of the supporting substrate, the pressure-sensitive adhesive layer being formed on the side of the supporting substrate on which the uneven portion is not disposed, wherein a maximum stress at an elongation of not more than 50 % is larger than a stress at break, and an elongation at break is from 100 to 300 % wherein the plastic film comprises a resin containing high-density polyethylene and low-density polyethylene and a filler, and the amount of the filler is not more than 5 parts by weight based on 100 parts by weight of the resin constituting the plastic film.

2. The pressure-sensitive adhesive tape according to claim 1, wherein the maximum stress at an elongation of not more than 50 % is 11 N/10 mm or more.

3. The pressure sensitive adhesive tape according to claim1, wherein the film is a film made of an olefin-based resin.

4. The pressure-sensitive adhesive tape according to claim 1, wherein the supporting substrate has transparency.

## Patentansprüche

1. Druckempfindliches Klebeband, das ein Trägersubstrat, das aus einem Kunststofffilm besteht, und eine druckempfindliche Klebeschicht umfasst, wobei ein unebener Abschnitt, der eine Form hat, die sich in der vertikalen Richtung gegen die Längsrichtung erstreckt, an einer Seite des Trägersubstrats angeordnet ist, die druckempfindliche Klebeschicht an der Seite des Trägersubstrats ausgebildet ist, an der der unebene Abschnitt nicht angeordnet ist, wobei eine maximale Spannung bei einer Dehnung von nicht mehr als 50 % größer ist als eine Bruchspannung und eine Bruchdehnung 100 bis 300 % beträgt, und der Kunststofffilm ein Harz umfasst, das Polyethylen hoher Dichte und Polyethylen niedriger Dichte sowie einen Füllstoff enthält, und die Menge an Füllstoff nicht mehr als 5 Gewichtsteile pro 100 Gewichtsteile des Harzes beträgt, das den Kunststofffilm bildet.

2. Druckempfindliches Klebeband nach Anspruch 1, wobei die maximale Spannung bei einer Dehnung von nicht mehr als 50 % 11 N/10 mm oder mehr beträgt.

3. Druckempfindliches Klebeband nach Anspruch 1, wobei der Film ein Film ist, der aus einem Harz auf Olefinbasis besteht.

4. Druckempfindliches Klebeband nach Anspruch 1, wobei das Trägersubstrat Transparenz aufweist.

## Revendications

1. Ruban adhésif sensible à la pression comprenant un substrat de support constitué d'un film plastique et une couche adhésive sensible à la pression, un portion non plane, présentant une forme s'étendant dans la direction verticale par rapport à la direction longitudinale, étant disposée sur une face du substrat de support, la couche adhésive sensible à la pression étant formée sur la face du substrat de support sur laquelle ne se trouve pas la portion non plane, une contrainte maximale à un allongement non supérieur à 50% étant supérieure à une contrainte à la rupture, et un allongement à la rupture étant de 100 à 300%, le film plastique comprenant une résine contenant du polyéthylène haute densité et du polyéthylène basse densité, et une charge, et la quantité de la charge n'étant pas supérieure à 5 parties en poids pour 100 parties en poids de la résine constituant le film plastique.

2. Ruban adhésif sensible à la pression selon la revendication 1, dans lequel la contrainte maximale pour un allongement non supérieur à 50% est de 11 N/10 mm ou plus.

3. Ruban adhésif sensible à la pression selon la revendication 1, dans lequel le film est un film constitué d'une résine oléfinique.

4. Ruban adhésif sensible à la pression selon la revendication 1, dans lequel le substrat de support présente une transparence.
